(19) Europäisches Patentamt
European Patent Office
Office européen des brevets

(11) Publication number: **0 316 822 B1**

## EUROPEAN PATENT SPECIFICATION

(45) Date of publication of patent specification: **18.05.94** (51) Int. Cl.⁵: **G02F 1/133**, G09G 3/36

(21) Application number: **88118889.0**

(22) Date of filing: **12.11.88**

(54) **Apparatus and method for providing a gray scale in liquid crystal flat panel displays.**

(30) Priority: **13.11.87 US 120553**

(43) Date of publication of application:
**24.05.89 Bulletin 89/21**

(45) Publication of the grant of the patent:
**18.05.94 Bulletin 94/20**

(84) Designated Contracting States:
**DE ES FR GB IT NL**

(56) References cited:
**EP-A- 0 293 048**
**FR-A- 2 537 316**
**JP-A-62 182 717**

**PATENT ABSTRACTS OF JAPAN, vol. 10, no.
41 (P-429)[2098], 18th February 1986 ; & JP-
A-60 188 924 (CITIZEN TOKEI K.K.) 26-09-1985**

**PATENT ABSTRACTS OF JAPAN, vol. 11, no.
270 (P-611)[2717], 3rd September 1987 ; &
JP-A-62 70 815 (SEMICONDUCTOR ENERGY
LAB. CO. LTD) 01-04-1987**

(73) Proprietor: **HONEYWELL INC.**
**Honeywell Plaza**
**Minneapolis Minnesota 55408(US)**

(72) Inventor: **Sarma, Kalluri R.**
**2352 South Los Altos Avenue**
**Mesa Arizona 85202(US)**

(74) Representative: **Rentzsch, Heinz, Dipl.-Ing. et
al**
**Honeywell Holding AG**
**Patent- und Lizenzabteilung**
**Kaiserleistrasse 39**
**Postfach 10 08 65**
**D-63008 Offenbach (DE)**

## Description

BACKGROUND OF THE INVENTION

1. Field of the Invention

This invention relates generally to devices for visually displaying data and images and, more particularly, to flat panel liquid crystal display devices.

2. Description of the Related Art

Certain materials, generally referred to as liquid crystals, are electro-optic in that an application of a voltage of appropriate magnitude changes the optical properties of light transmitted through the the liquid crystal media. This change in the light transmitted through the liquid crystal media has received increasing use as the basis for optical displays. This electro-optic behavior is particularly well suited for active matrix displays where a high impedance solid state switch (such as a thin film transistor or diode) is used to transfer voltage to the liquid crystal capacitor at each pixel of the matrix display. In addition, the liquid crystal display units have a low power requirement, the power being used only to deform the initial orientation of the liquid crystal molecules. Liquid crystal display units can operate in ambient light when a mirror is placed behind the liquid crystal material and the optical properties of the material are used to control the reflected light. The use of ambient light typically requires that the liquid crystal display unit be oriented carefully with respect to the light source. To reduce the orientation problem and to alleviate the requirement for an ambient light, the liquid crystal display panel can be illuminated from the rear. Finally, the liquid crystal display panel can be fabricated to be flat and relatively narrow. With modern technology, the associated circuits can be made to occupy relatively little space within any desired configuration.

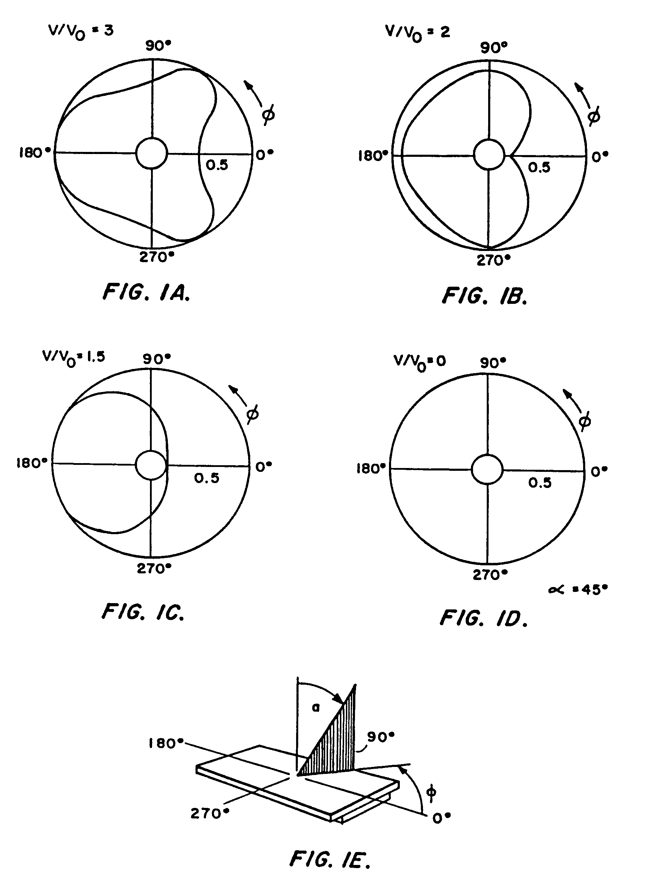

However, to the present time, the liquid crystal displays have suffered from the inability to incorporate a satisfactory gray scale capability in the unit. In the past, attempts to achieve a gray scale capability in liquid crystal displays have used the direct approach of dividing each display point, hereinafter referred to as pixel, into a plurality of subunits or subpixels. The number of subunits which are activated provides the gray scale gradations, the eye typically positions at sufficient distance to integrate any image granularity of the pixel. This approach has proven unsatisfactory for two reasons. For any significant number of pixel subunits, the density of address lines is greatly increased with the resulting difficulties in fabrication. And the addressing becomes more difficult because a plurality of subpixels may need to be activated simultaneously for each pixel. Another technique that has been attempted in order to achieve a gray scale is the result of partially deforming the molecular orientation of the liquid crystal material by applying a voltage to the pixel that is greater than the threshold voltage, but less than the voltage for optical saturation. For a twisted nematic liquid crystal display, such a voltage level produces partial deformation of the liquid crystal molecular alignment. However, the partial deformation results in a gray scale which is a function of the viewing angle about an axis perpendicular to the liquid crystal display and, for this reason, has not proven satisfactory. Referring now to Fig. 1, the angular dependence of the transmission of light through a twisted nematic liquid crystal for several applied voltages is illustrated. The applied voltage is stated in terms of the ratio of the applied voltage $V$ to the threshold voltage $V_O$ for $V/V_O = 3$ (Fig. 1A), 2 (Fig. 1B), 1.5 (Fig. 1C) and 0 (Fig. 1D). The angle of viewing (i.e., departure from the axis of the display unit) is 45° and the angle 0 is the angle around the axis (the angles being illustrated in Fig. 1E). The magnitude of transmission is given by the distance from the center (axis) of the Figure. As will be apparent, any attempt to use the applied voltage in a cell containing a twisted nematic liquid crystal to control the gray scale will be unsatisfactory because of the angular dependence of the optical transmission.

A need has therefore been felt for a technique that would provide a gray scale capability for a liquid crystal display unit without the angular dependence associated with prior art liquid crystal display unit gray scale techniques.

JP-A 62-182717 published in Patent Abstracts of Japan, Vol. 12, No. 29 (P-660) (2876) on January 28, 1988 describes a liquid crystal display having the pixel elements divided into four subpixels as described in the preamble of claim 1. The individual subpixels have different sizes in a relation to 1:2:4:8, and the thin film transistors associated with the subpixels are made to switch at different voltages. A scanning electrode is connected to the gate electrodes of four thin film transistors having different electrical characteristics, and a signal electrode is connected to their drain electrodes. The display electrodes having an area ratio of 1:2:4:8 are connected to the source electrodes. The channel length of the four thin film transistors associated with each subpixel of a pixel is 16$\mu$m, 8$\mu$m, 4$\mu$m and 2$\mu$m long, respectively, and their channel width is identical for all of them. By this structure subpixel number 1 turns on at 2 volts and provides one unit of brightness at this point. Then as the applied control voltage increases, subpixel 2 turns on at 4 volts, at which time, since it is twice the size of subpixel 1, it will provide two units of brightness thus increasing the overall brightness from one to three units. With a further increase in voltage subpixel 3 of the picture element will turn on at 8 volts, and since it again it is twice the size of subpixel 2, it will provide an additional four units of brightness and increase the overall brightness from three to seven units. Finally, at 16 volts subpixel 4 will turn on, and the overall brightness will be increased from 7 to 15 units.

By the characterizing features of claim 1, the present invention achieves a linear increase in brightness for each pixel. Preferred details of the invention are described in the dependent claims. The invention also encompases a method for generating a gray scale in a picture element or pixel of a liquid crystal display.

The invention discloses an improved liquid crystal display where the voltage applied to a pixel controls the number of activated subpixels. The gray scale of the pixel is independent of the viewing angle. The LCD has improved gray scale characteristics in response to analog input signals. No additional address lines are required.

The aforementioned and other features are accomplished, according to the present invention, by providing a plurality of subpixels associated with each pixel of the display. A thin film transistor is placed in series with each subpixel effective capacitor, the effective capacitor having the liquid crystal material between the plates. The thin film transistors associated with each subpixel have parameters adjusted to control, for a preselected voltage applied to the pixel, the charging and therefore the final voltage applied to the liquid crystal material. By selection of the thin film transistor parameters and the applied voltage levels, pixel can be provided with gray scale capability in which the liquid crystal material of optically active subpixels in the saturation state. Because the liquid crystal associated with each subpixel is either unaffected by the applied voltage or else is saturated, the angular homogeneity of the transmitted radiation is greatly improved. The angular homogeneity of the transmitted radiation of the display device to analog signals is also improved.

These and other features of the present invention will be understood upon reading of the following description along with the drawings.

BRIEF DESCRIPTION OF THE DRAWINGS

Figure 1 illustrates the angular dependence of the optical transmission for a twisted nematic liquid crystal material.

Figure 2 is a block diagram illustrating the liquid crystal matrix display.

Figure 3A illustrates the electrical coupling of the column and row conductors to the pixel element and Figure 3B illustrates the equivalent circuit for the electrical coupling.

Figure 4 is a matrix color liquid crystal display capable of using the present invention.

Figure 5 illustrates a conceptual explanation of the operation of the color liquid crystal matrix display of Fig. 4.

Figure 6 illustrates how gray scale levels can be achieved by half tone techniques.

Figure 7 illustrates the structure of a pixel according to the present invention.

Figure 8 is an equivalent electrical circuit of the liquid crystal display pixel shown in Fig. 7.

Figure 9 illustrates the current through the thin film transistor as a function of source-drain voltage.

Figure 10 illustrates the the equivalent circuit for the charging of the liquid crystal pixel capacitor.

Figure 11A illustrates the procedure for designing a liquid crystal pixel cell having subpixel activation determined by the the applied voltage level, while Figure 11B is a table illustrating the results of an example of designing a liquid crystal according to the present invention.

Figure 12 illustrates a property of liquid crystal materials that effects the structure of the subpixels.

DESCRIPTION OF THE PREFERRED EMBODIMENT

1. Detailed Description of the Figures

Fig. 1 has been discussed with reference to the related art.

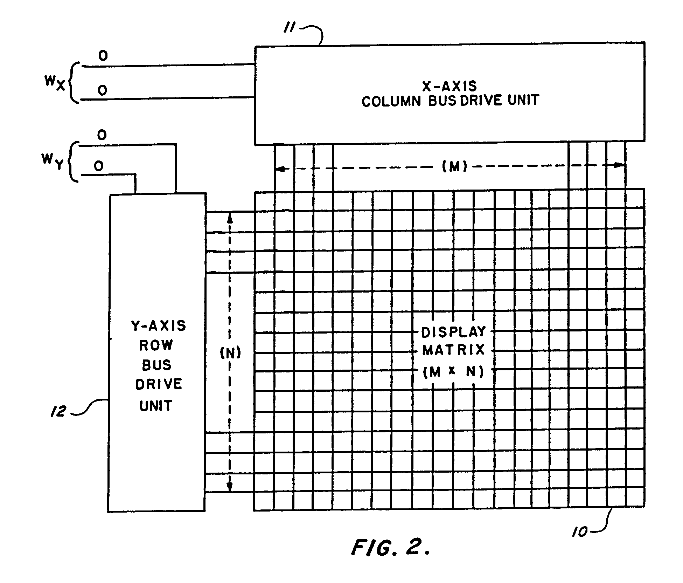

Referring now to Fig. 2, the block diagram of the liquid crystal display matrix is shown. The liquid crystal display 10 has a multiplicity (MxN) of pixels, each pixel being addressed by one of M column conductors and one of N row conductors. The M column conductors are selected by x-axis column bus drive unit 11 in response to groups of address signals, $W_x$, and the N row conductors are selected by y- row bus drive unit 12. The intersection of an activated column conductor and an activated row conductor activates the associated pixel.

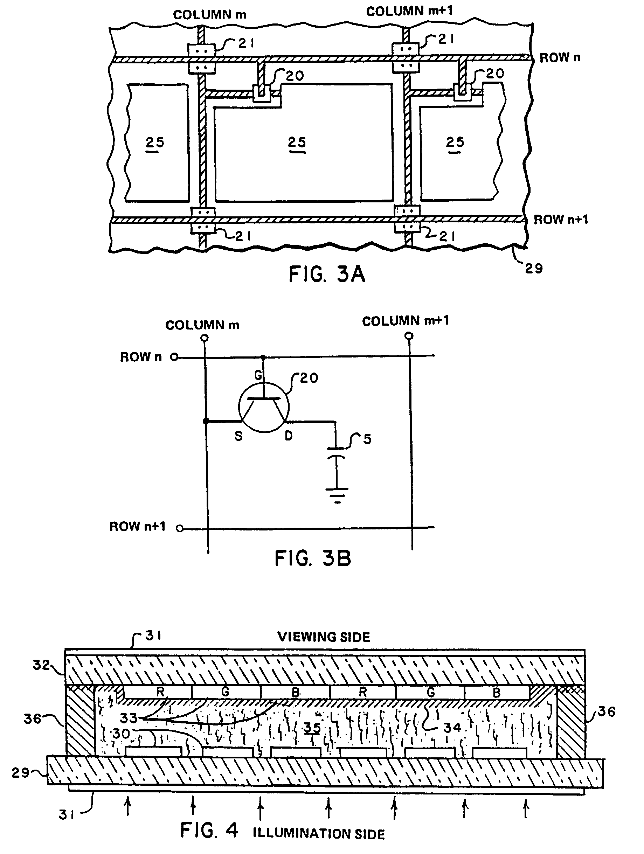

Referring next to Fig. 3A, the coupling of the column and row conductors to the pixel is illustrated. The row and column conductors are deposited on a substrate 29 that forms one surface of the container for the liquid crystal material. The row conductors and the column conductors are separated (electrically) by insulating material pads 21. Fabricated in close proximity to the intersection of a column conductor (m) and a row conductor (n) is a thin film transistor 20. The thin film transistor 20 has a source terminal coupled to the column conductor (m) and the gate terminal coupled to row conductor (n). The thin film transistor 20 has the drain terminal coupled to conducting material 25 located on the interior surface of the substrate 29 (fabricated from glass in the preferred embodiment). The electric field applied to the liquid crystal pixel (m,n) is the result of the potential difference between the voltage applied to conducting material 25 and the voltage of the common terminal fabricated on the second substrate 32 (shown in Fig. 4) containing the liquid crystal material. The substrate 32, in the preferred embodiment, is a glass material with the common terminal deposited on the interior surface. The equivalent electrical circuit for the pixel is shown in Fig. 3B. The thin film transistor 20 has the source terminal coupled to the column conductor (m) and has the gate terminal coupled to the row terminal (n). The drain terminal of transistor 20 is coupled to capacitance 5. Capacitance 5 is formed by the conducting material 25, the liquid crystal acting as a dielectric material and the ground terminal on the second plate of the liquid crystal display.

Referring next to Fig. 4, a color liquid crystal display is shown. Glass substrate 29 has a polarizer 31 associated with the exterior surface of substrate 29 while the interior surface of substrate 29 has electrodes 30 (i.e. the thin film transistors 20 and the conducting material 25 of Fig. 3 as well as the column and row conductors) deposited thereon. The second substrate 32 has a polarizer 31 associated with an exterior surface and has color filters associated with the interior surface. A conducting material 34 which serves as the common electrode is positioned on the interior of glass substrate 32. The filters 33 are positioned on the interior of the glass substrate prior to the conducting material 34. Liquid crystal 35 is placed between the first and second substrate and associated materials, while spacers 36 maintain the inter-substrate distance and contain the liquid crystal.

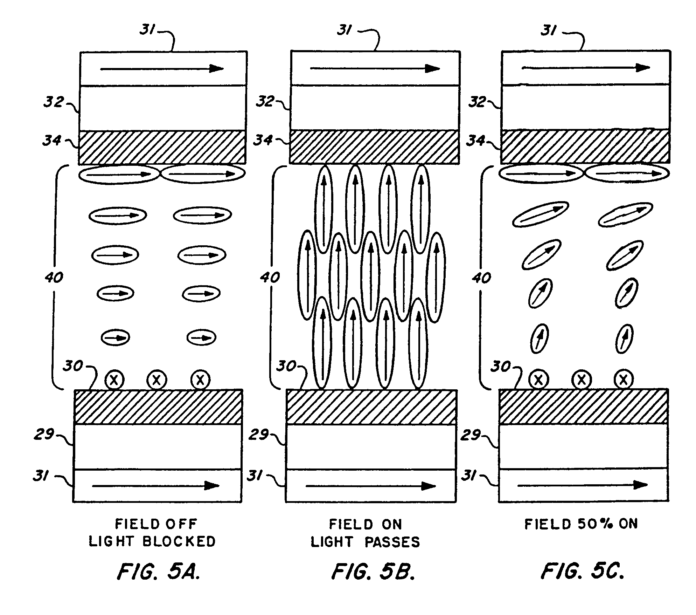

Referring next to Fig. 5, the mode of operation of the liquid crystal display of Fig. 4 using a twisted nematic liquid crystal display, for light transmitted through the display, is shown. In the twisted nematic liquid crystal, the molecules 40 are generally oblong. In Fig. 5A, when the polarizers 31, associated with substrate 32 and 29 respectively, are aligned and no voltage is applied between the electrodes 30 and 34, the molecules of the twisted nematic are generally oriented, along the long axis, parallel to the constraining surfaces. However, the molecules are slightly rotated relative to the nearest neighbors along an axis perpendicular to the constraining surfaces. In this molecular configuration, light polarized by the light polarizer 31 associated with substrate 31 and traveling along the axis perpendicular to the two constraining surfaces will not be transmitted by the polarizer 31 associated with substrate 32. In Fig. 5B, when a sufficiently large voltage is applied between electrodes 34 and 30, the molecules 40 are aligned with the electric field and light can be transmitted through the display. In Fig. 5C, for intermediate fields, the molecules 40 retain the rotational aspects found in the material when no field is applied, partial alignment with the electric field occurs for molecules in the interior of the display. However, as illustrated in Fig. 1, for intermediate fields, the transmitted light is not axially symmetric.

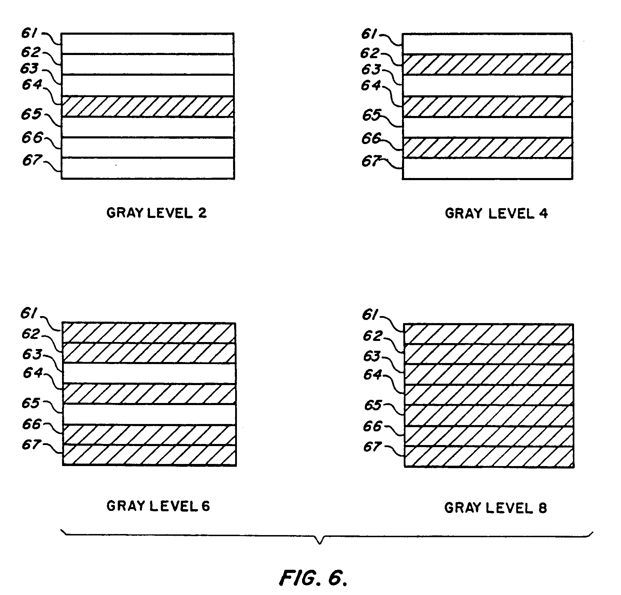

Referring next to Fig. 6, the technique for achieving an 8 step gray scale by selectively activating regions of a 7 sector pixel matrix is shown. This technique is known as the half-tone technique and relies on the integration by the eye when a pixel is sufficiently distant and/or sufficiently small to prevent resolution of the subpixels (or subregions). In gray scale level No. 1 (not illustrated), no portion of the pixel is illuminated (i.e., by transmission of light). In gray scale level No. 2, one pixel subregion has light transmitted therethrough. With each successive gray scale level No., an additional subpixel region has light transmitted therethrough, until, at gray level No. 8, the entire pixel is illuminated by having light transmitted therethrough.

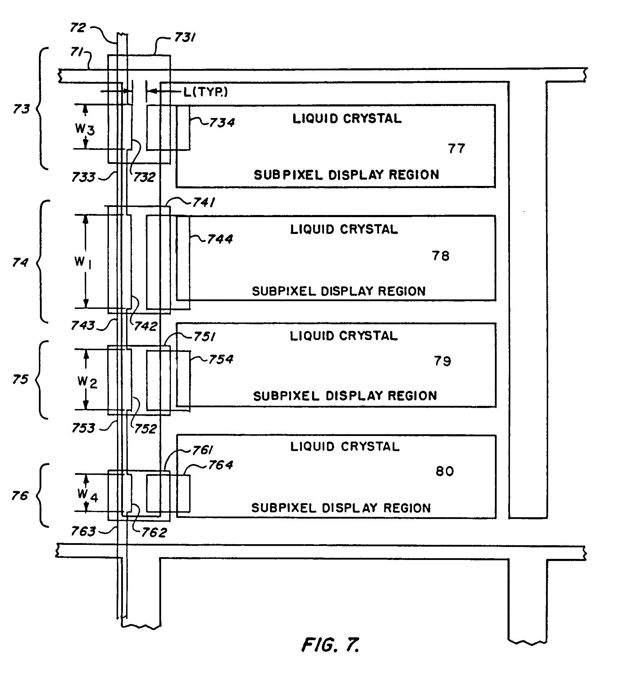

Referring next to Fig. 7, the structure of a liquid crystal display pixel, according to the preferred embodiment is shown. Each liquid crystal display pixel has a plurality of liquid crystal subpixel regions 77 through 80 for controlling the transmission of light therethrough. Associated with each liquid crystal subpixel region 77 - 80 is a thin film transistor 73 - 76 respectively. Each thin film transistor (73, 74, 75 and 76) has a gate dielectric/semiconductor island (731, 741, 751 and 761) on which the thin film transistor is fabricated. The thin film transistors (73, 74, 75 and 76) each have a source element (733, 743, 753 and 763), a gate element (732, 742, 752 and 762) and a drain element (734, 744, 754 and 764). The drain elements are coupled to the conducting element of the liquid crystal subpixel region that applies voltage to the associated liquid crystal material. The gate elements of the thin film transistors are coupled together by gate bus 71, while the source elements of the thin film transistors are coupled to the source bus 72. The W and L are dimensions that will be described below.

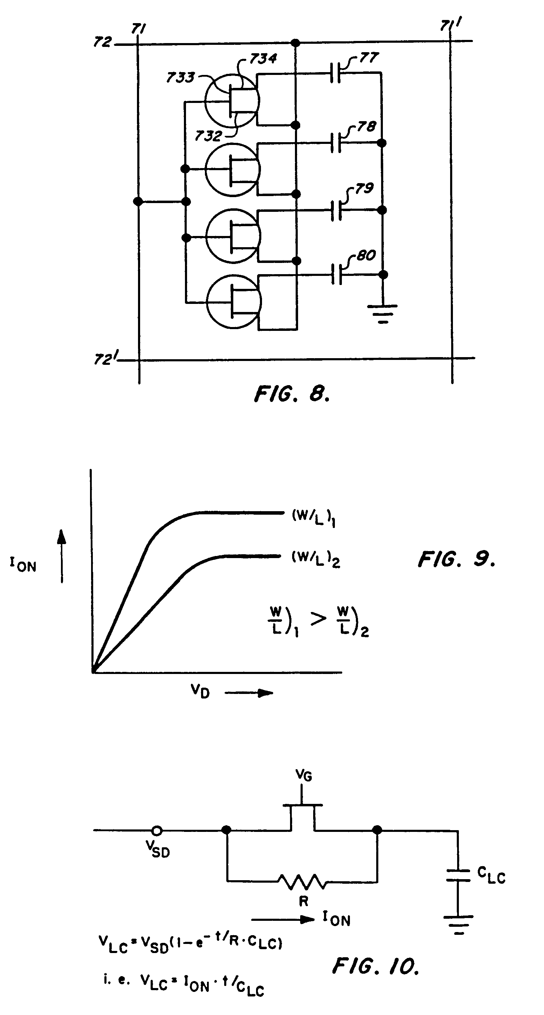

Referring next to Fig. 8, the equivalent electrical circuit of the pixel element illustrated in Fig. 7 is shown. The liquid crystal subpixel display regions 77, 78, 79 and 80 behave in a manner similar to capacitors. The gate bus 71 provide controllable voltages to the gate terminals of the thin film transistors including the illustrated gate terminal 733. The source bus 72 applies a controllable voltage to the thin film transistors including the illustrated source terminal 732. Finally, the drain terminals of the film transistors are coupled to the associated (liquid crystal display region) capacitor, drain terminal 734 is illustrated as being coupled to capacitor 77.

Referring next to Fig. 9, a graph of the current through the thin film transistor as a function of drain to source voltage is shown. The equations governing this relationship for the linear region $\{V_D < (V_G - V_T)\}$ and for the saturated region $\{V_D > (V_G - V_T)\}$ are exhibited below as equation 1. ) and equation 2.) respectively.

Referring next to Fig. 10, the equivalent circuit of a thin film transistor and the liquid crystal subpixel display region and the equations governing the charging of the equivalent liquid crystal subpixel display region capacitor ($C_{LC}$) is shown. The voltage $V_{SD}$ is the voltage across the thin film transistor (from the drain terminal to the source terminal).

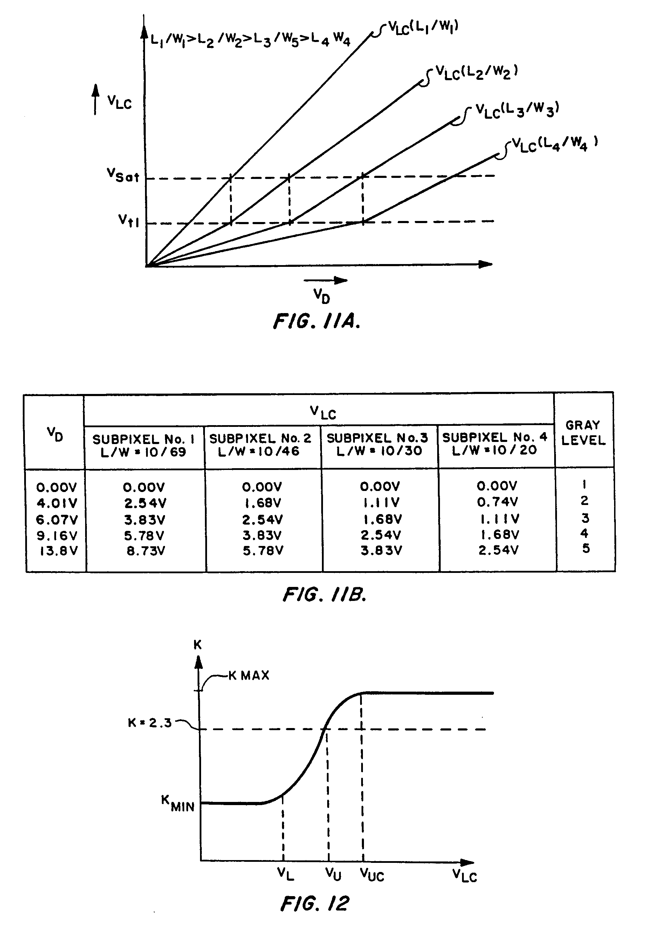

Referring next to Fig. 11, a graph illustrating the procedure for determining the source-drain voltage $V_D$ to control the gray scale level. In essence, the activation voltage, the L/W (i.e., the length to width ratio of the thin film transistor channel) and the activation time must be chosen so that the voltage across the liquid crystal subpixel display regions (capacitors) to transmit radiation are above the liquid crystal saturation voltage, while the liquid crystal display regions (capacitors) that are to be opaque have a voltage below the threshold voltage level. The illustrative example, shown in the table of Fig. 11B is discussed below.

Referring to Fig. 12, the functionality of the dielectric constant for an effective liquid crystal capacitor as a function of applied voltage is illustrated. The relative dielectric constant K has a minimum value that remains essentially constant until the voltage reaches the vicinity of the voltage for optical activation, $V_L$. The relative dielectric constant continues to rise through the voltage level $V_U$ for optical saturation and reaches a maximum value at a voltage level $V_{UC}$ for dielectric saturation. This variation in dielectric constant must be taken into account when establishing the voltage that must be applied to a selected subpixel for optical saturation while the next selected subpixel has a voltage applied thereto that is near the threshold of optical activity.

## 2. Operation of the Preferred Embodiment

By using a thin film transistors having selected characteristics to provide controlled charging, and hence a controlled final voltage across the liquid crystal material, voltages can be chosen that so that the voltages across the subpixel are either below the threshold voltage or above the saturation voltage for the liquid crystal material. The capability to apply a controllable voltage to the pixel, along with the capability to control the optical properties of each subpixel as a function of voltage applied to the pixel, permits the liquid crystal display pixels to provide wide viewing angle gray scale capability, i.e., as a function of applied voltage.

The relationship between the parameters of the thin film transistor and the voltage that is applied to the pixel that provides the gray scale capability of the preferred embodiment can be understood as follows. Referring once again to Fig. 9, the current through the thin film transistor is governed by the equations:

1.)  $I_{ON} = u_{fe}{}^*C_i{}^*(W/L)^*[(V_G-V_T)^*V_D-V^2{}_D/2]$ for $V_D < (V_G-V_T)$

and

2.)  $I_{ON} = u_{fe}{}^*C_i{}^*(W/2L)^*(V_G-V_T)^2$ for $V_D > (V_G-V_T)$

where

| | |
|---|---|
| $u_{fe}$ = | field effect mobility |
| $C_i$ = | capacitance per unit length of gate dielectric |
| L = | channel length |
| W = | channel width |
| $V_G$ = | gate voltage |
| $V_D$ = | source - drain voltage, and |
| $V_T$ = | threshold voltage. |

As will be clear, when all other quantities are held constant, the current through the thin film transistor that charges the liquid crystal subpixel display region capacitor ($= C_{LC}$) varies linearly with the W/L ratio both in the linear region $\{V_D < (V_G-V_T)\}$ and in the saturated region $\{V_D > (V_G-V_T)\}$. Thus, Fig. 9 schematically shows $I_{ON}$ as a function of $V_D$ for a constant $V_G$ for different W/L ratios.

Because the currents charging the liquid crystal subpixel display capacitors ($C_{LC}$) are a function of the associated thin film transistor structures, the the voltages across the capacitors, as shown in Fig. 10, will be given by the equation:

3.)  $V_{LC} = V_D{}^*(1-e^{-t/R^*C}LC)$

where

| | |
|---|---|
| t = | the time the associated thin film transistor is activated (conducting) |
| R = | the equivalent resistance of the associated thin film transistor, and |
| $C_{LC}$ = | the equivalent capacitance of the associated liquid crystal subpixel display region. |

Using the first order approximation, this equation

can be written:

4.)     $V_{LC} = I_D^* t / C_{LC}$

Referring once again to Fig. 11A, the technique for designing a gray scale display as a function of the current through the thin film transistor (actually controlled by the W/L ratio in the thin film transistor) charging the associated capacitor $C_{LC}$ resulting from an applied source to drain voltage $V_D$ is shown. For no pixel subregions to be illuminated (i.e., transmit light), the $V_{th} \geq V(1)_{LC}$, $V(2)_{LC}$, $V(3)_{LC}$ and $V(4)_{LC}$. This situation can be created when $V_D \leq V^1_D$. For one subpixel region to be illuminated, then $V(1)_{LC} \geq V_{sat}$ and $V_{th} \geq V(2)_{LC}, V(3)_{LC}$ and $V(4)_{LC}$. This situation can result when $V_D = V^1_{LC}$. Similarly, by choosing the W/L ratios appropriately, a voltage can be determined for which one set of subpixel regions is illuminated while the remaining subpixel regions are opaque. By way of example, the results of which are shown in Fig. 11B, when the liquid crystal material is MERK - ZLI2664 with a threshold voltage $V_{th}$ of 1.68V and a saturation voltage of $V_{sat}$ of 2.54V. The dielectric constant of this material is 19.1 in the direction parallel to the electric field and is 5.1 in the direction perpendicular too the electrical field. The display size is 192 rows by 96 columns with a 60 Hz refresh rate. The capacitance of each subpixel is calculated to be 0.56 pf (picofarads) when the dimensions are 283 um x 67 um. Using a pixel address (charging) time of 142 usec, 0.016 uA would be required to charge a subpixel region to 2.54 V. Using this information and appropriate values for $C_i$ and $u_{fe}$, the minimum W/L ratio is two. The subpixel region is therefore the last region to be turned on. The subpixel with a thin film transistor ratio of 2 requires a pixel voltage of 13.8 V to be turned on to saturation, reaching $V_{sat} = 2.58$ V. The next thin film transistor W/L requirement is subject to the condition that the associated subpixel is charged to a voltage greater than the saturation voltage ($V_{sat} = 2.54$ V) before the previous voltage reaches the threshold voltage ($V_{th} = 1.68$ V). Table 1 shows the results of this type of computation. Thus, when a gray scale of 5 is required, a voltage $V_D = 13.8$ V is applied whereas a gray scale of 3 requires an voltage $V_D = 6.07$ V. The gate voltage is selected so that the thin film transistor operates in a linear range (i.e., $V_D \leq V_G - V_T$). The calculations and design do not have to be precise with respect to the absolute value of the thin film transistor channel properties. The performance can be optimized by variations in the pixel address (charging) time and the gate voltage, these parameters being held constant after optimization. However, the W/L ratios are crucial.

It will be clear that one of the advantages of the present invention is that no additional process steps are required in the fabrication of the device, the single thin film transistor being replaced by the plurality of thin film transistors associated with the sub pixel region.

In the present invention, the activation of selected subpixels is controlled by introducing a thin film transistor in series with the liquid crystal effective capacitor of the subpixel. The thin film transistor is fabricated to provide a controlled rate of charging of the associated subpixel capacitor compared to the rate of subpixel capacitor charging of the remaining subpixel capacitors. By arranging the thin film transistor properties to provide optical activation of the subpixel liquid crystal material at selected voltages applied to the pixel, a gray scale capability can be obtained as a function of voltage applied to the pixel. The parameters of the thin film transistor that are varied in the preferred embodiment are the width W and the length L of the transistor channel region. In the preferred embodiment, the thin film transistors controlling the application of voltage to each subpixel are fabricated on the substrate using any thin film transistor technology. These transistors can be fabricated using amorphous silicon, polysilicon, cadmium selenide, telurium or other suitable material. The liquid crystal material is selected from a suitable twisted nematic material. However, it will be clear that the approach of the present invention can be used for materials that have an optical activation determined as a function of voltage. The substrate can be fabricated from glass, high temperature glass, quartz or other appropriate material.

When the image to be displayed on the liquid crystal display is stored as a group of logic signals, then a digital to analog converter can be used to obtain the appropriate pixel voltage $V_A$.

Although the present invention has been described with respect to steps in voltage applied to the pixel that eliminates non-optically saturated subpixels, it will be clear that the present invention will increase the uniformity of the light transmission over a wide viewing angle in response to the application of analog signals to the pixel elements of the liquid crystal display unit. This improvement is the result of fact that, for a plurality of subpixels, an applied analog signal results in only one subpixel not being in a saturated state. Thus, only one subpixel (of the plurality of subpixels) will have an optical transmission with appreciable angular dependence. Therefore, the angular dependence will be less apparent, being superimposed on an optical transmission without appreciable angular dependence. Similarly, a gray scale pixel element can be created by using the techniques described in the present invention by creating a sequence of subpixels for each pixel that achieve optical saturation at different voltages, but not necessarily having the relationship shown in Fig. 11A. When the pixel typically has a plurality of subpixels in a state of optical transmission saturation, the uniformity of the axial optical transmission will be improved.

The foregoing description is included to illustrate the operation of the preferred embodiment and is not meant to limit the scope of the invention. The scope of the invention is to be limited only by the following claims.

## Claims

1. A pixel element of a liquid crystal display, said pixel element comprising:

    a) a plurality of subpixel elements (77 - 80) each including a subpixel display region defined by a first and a second conducting region together forming the plates (34, 30) of a subpixel capacitor which applies an electrical field to a liquid crystal material (35) provided between said plates when an electrical charge is stored on said plates; and

    b) one activation element (73 - 76) for each subpixel element having an output terminal (734, 744, 754, 764) connected to said first conducting region of said subpixel capacitor; wherein

    c) all activation elements of said pixel element are arranged so that a common activation voltage ($V_G$) is applied to a first electrode (733, 743, 753, 763) of each said activation element and a common control voltage ($V_D$) is applied to a second electrode (732, 742, 752, 762) of each said activation element; and wherein

    d) each of said subpixels reaches optical saturation at a different voltage applied to said pixel element and within said pixel element the number of subpixel elements (77 - 80) in which the liquid crystal material (35) is optically saturated is a function of said control voltage magnitude ($V_D$);

    **characterized in that**

    e) each subpixel display region is of substantially equal size; and

    f) each activation element (73 - 76) of said pixel element has a different value of a preselected parameter selected to charge the associated subpixel capacitor at a different charging rate during the presence of said common activation voltage ($V_G$).

2. The pixel element of claim 1, wherein the activation elements are thin film transistors, **characterized in that** said thin film transistors (20) have a preselected geometric structure determining the charging rate of the associated subpixel capacitor (77 - 80).

3. The pixel element of claim 2, **characterized in that** said preselected geometric structure is the ratio of the width (W) to the length (L) of a current flow channel of said thin film transistor (73 - 76).

4. The pixel element according to claim 1, 2 or 3, **characterized in that** said subpixel elements (72 to 80) are arranged in a sequence for activation, a selected subpixel reaching optical saturation in response to a saturation voltage applied to said pixel element, while a next pixel in said sequence for activation has not reached a threshold optical activation voltage.

5. A liquid crystal display comprising a plurality of pixel elements according to one of the preceding claims, **characterized by** a plurality of thin film transistors (73 to 76) for activating the pixel elements, whereat each thin film transistor is coupled to a subpixel (77 to 80) and is adapted to receive said control voltage.

6. The liquid crystal display of claim 5, **characterized in that** the liquid crystal material (35) associated with one subpixel in an activation sequence of said subpixels (77 to 80) has an optical saturation voltage applied thereto when liquid crystal material associated with a next sequential subpixel has approximately a threshold voltage applied thereto for a predetermined voltage applied to said pixel.

7. The liquid crystal display of claim 6, **characterized in that** the liquid crystal material (35) of each subpixel (77 to 80) has an optical saturation voltage applied thereto for a different value of the voltage applied to said pixel.

8. A method of generating a gray scale for a pixel element in a liquid crystal display having a plurality of pixel elements, each element being divided into a plurality of subpixels (77 to 80), **characterized by**

    a) dividing said pixel elements such that all subpixels have substantially the same optical viewing area and all subpixel capacitors formed by conducting plates (30, 34) at both sides of liquid crystal material (35) have substantially equal capacitances;

    b) fabricating a thin film transistor (73 to 76) for each subpixel with all thin film transistors having substantially equal threshold voltages;

    c) coupling an output terminal (734, 744, 754, 764) of each of said thin film transistors to a first conducting plate of a subpixel capacitor;

d) coupling input terminals (733, 743, 753, 763) of said thin film transistors of a pixel element to one of a first plurality (71) of conducting leads, said first plurality receiving signals (V$_D$) related to a display image;

e) coupling control terminals (732, 742, 752, 762) of said thin film transistors of a pixel element to one of a second plurality (72) of conducting leads and supplying signals (V$_G$) related to pixel activation to said second plurality; and

f) selecting structural parameters of each of said thin film transistors (73 to 76) of each pixel element (77 to 80) such as to differently charge the associated subpixel capacitor, whereat

g) each subpixel capacitor is charged during application of a control signal (V$_G$) to said control terminals at a different rate determined by a magnitude of a voltage (V$_D$) applied to said input terminals.

9. A method of claim 8, **characterized in that** the thin film transistor parameters are selected such that for application of a control signal (V$_G$) of predetermined duration and application of an image signal (V$_D$) of preselected magnitude a first subpixel capacitor (77 to 80) has a charge stored therein causing said liquid crystal material (35) to become optically saturated when a charge stored on a next sequential subpixel capacitor results in insignificant optical activity for said next sequential subpixel capacitor.

10. The method according to claim 8 or 9, **characterized by** adjusting the parameters of each subpixel thin film transistor (73 to 76) such as to provide only one optically unsaturated subpixel region for each optically activated pixel.

**Patentansprüche**

1. Pixel-Element einer Flüssigkristallanzeige, welches umfaßt:

a) mehrere Subpixel-Elemente (77 - 80), die jeweils eine durch einen ersten und einen zweiten Leiterbereich definierte Subpixel-Anzeigeregion aufweisen, wobei die Leiterbereiche die Belegungen (34, 30) eines Subpixel-Kondensators bilden, der ein elektrisches Feld an ein zwischen den Belegungen befindliches Flüssigkristallmaterial legt, sobald auf den Belegungen eine elektrische Ladung gespeichert wird;

b) je ein mit einer Ausgangsklemme (734, 744, 754, 764) an den ersten Leiterbereich des Subpixel-Kondensators angeschlossenes Aktivierungselement (73 - 76) für jedes Subpixel-Element; wobei

c) alle Aktivierungselemente des Pixel-Elements derart angeordnet sind, daß eine gemeinsame Aktivierungsspannung (V$_G$) einer ersten Elektrode (733, 743, 753, 763) jedes Aktivierungselements und eine gemeinsame Steuerspannung (V$_D$) einer zweiten Elektrode (732, 742, 752, 762) jedes Aktivierungselements zugeführt wird; und wobei

d) jedes der Subpixel bei einer anderen dem Pixelelement zugeführten Spannung die optische Sättigung erreicht und in dem Pixelelement die Anzahl der Subpixel-Elemente (77 - 80), deren Flüssigkristallmaterial optisch gesättigt ist, eine Funktion der Größe des Steuersignals (V$_D$) ist;

**dadurch gekennzeichnet,**

e) jede Subpixel-Anzeigeregion praktisch die gleiche Größe hat; und

f) jedes Aktivierungselement (73 - 76) des Pixel-Elements einen unterschiedlichen Wert eines vorgewählten Parameters hat, um den zugehörigen Subpixel-Kondensator während des Vorhandenseins der gemeinsamen Aktivierungsspannung (V$_G$) mit unterschiedlicher Ladegeschwindigkeit aufzuladen.

2. Pixel-Element nach Anspruch 1, bei dem die Aktivierungselemente Dünnschichttransistoren sind, **dadurch gekennzeichnet,** daß die Dünnschichttransistoren (20) eine vorgewählte geometrische Struktur haben, welche die Ladegeschwindigkeit des zugeordneten Subpixel-Kondensators (77 - 80) bestimmt.

3. Pixel-Element nach Anspruch 2, **dadurch gekennzeichnet,** daß die vorgewählte geometrische Struktur das Verhältnis der Breite (W) zur Länge (L) eines Stromflußkanals des Dünnschichttransistors (73 - 76) ist.

4. Pixel-Element nach Anspruch 1, 2 oder 3, **dadurch gekennzeichnet,** daß die Subpixel-Elemente (72 - 80) in einer Aktivierungsfolge angeordnet sind, wobei ein ausgewähltes Subpixel die optische Sättigung bei einer dem Pixel-Element zugeführten Sättigungsspannung erreicht, während das nächste Pixel in der Aktivierungsfolge eine Schwellwertspannung für die optische Aktivierung nicht erreicht hat.

5. Flüssigkristallanzeige mit mehreren Pixel-Elementen nach einem der vorangehenden Ansprüche, **gekennzeichnet durch** mehrere Dünnschichttransistoren (73 - 76) zum Aktivieren der Pixel-Elemente, wobei jeder Dünnschichttransistor an ein Subpixel (77 - 80) angeschlossen ist und die Steuerspannung empfängt.

6. Flüssigkristallanzeige nach Anspruch 5, **dadurch gekennzeichnet,** daß das einem Subpixel in einer Aktivierungsfolge von Subpixeln (77 - 80) zugeordnete Flüssigkristallmaterial (35) eine optische Sättigungsspannung erhält, sobald das dem nachfolgenden Subpixel zugeordnete Flüssigkristallmaterial für eine vorgegebene, dem Pixel zugeführte Spannung angenähert eine Schwellwertspannung erhält.

7. Flüssigkristallanzeige nach Anspruch 6, **dadurch gekennzeichnet,** daß das Flüssigkristallmaterial (35) jedes Subpixels (77 - 80) eine optische Sättigungsspannung bei einem unterschiedlichen Wert der dem Pixel zugeführten Spannung erhält.

8. Verfahren zur Erzeugung von Grautönen für ein Pixelelement in einer Flüssigkristallanzeige mit mehreren Pixelelementen, wobei jedes Element in mehrere Subpixel (77 - 80) unterteilt ist, **gekennzeichnet durch**

a) eine solche Unterteilung des Pixel-Elements, daß alle Subpixel praktisch die gleiche optische Betrachtungsfläche haben und alle durch Leiterbelegungen (30, 34) zu beiden Seiten des Flüssigkristallmaterials (35) gebildete Subpixel-Kondensatoren praktisch die gleiche Kapazität aufweisen;

b) Herstellen eines Dünnschichttransistors (73 - 76) für jedes Subpixel, wobei alle Dünnschichttransistoren praktisch die gleiche Schwellwertspannung haben;

c) Anschließen einer Ausgangsklemme (734, 744, 754, 764) jedes Dünnschichttransistors an eine erste leitende Belegung eines Subpixel-Kondensators;

d) Anschließen der Eingangsklemmen (733, 743, 753, 763) der Dünnschichttransistoren eines Pixel-Elements an eine von mehreren ersten Leitungen (71), welche zu einem Darstellungsbild gehörige Signale ($V_D$) empfangen;

e) Anschließen der Steuerklemmen (732, 742, 752, 762) der Dünnschichttransistoren eines Pixel-Elements an eine von mehreren zweiten Leitungen (72) und Zufuhr von der Pixel-Aktivierung dienenden Signalen ($V_G$) an diese zweite Gruppe; und

f) Auswahl struktureller Parameter jedes Dünnschichttransistors (73 - 76) jedes Pixel-Elements (77 - 80) derart, daß der zugeordnete Subpixel-Kondensator unterschiedlich aufgeladen wird, wobei

g) jeder Subpixel-Kondensator während des Anstehens eines Steuersignals ($V_G$) an den Steueranschlüssen mit einer unterschiedlichen Geschwindigkeit aufgeladen wird, welche durch die Höhe der den Eingangsklemmen zugeführten Spannung ($V_D$) bestimmt ist.

9. Verfahren nach Anspruch 8, **dadurch gekennzeichnet,** daß die Parameter der Dünnschichttransistoren derart ausgewählt sind, daß bei Zufuhr eines Steuersignals ($V_G$) vorgegebener Dauer und bei Zufuhr eines Bildsignals ($V_D$) vorgewählter Höhe auf einem ersten Subpixel-Kondensator (77 - 80) eine Ladung gespeichert wird, welche das Flüssigkristallmaterial (35) in optische Sättigung überführt, wenn die auf einem nachfolgenden Subpixel-Kondensator gespeicherte Ladung eine unbedeutende optische Aktivierung für den nachfolgenden Subpixel-Kondensator ergibt.

10. Verfahren nach Anspruch 8 oder 9, **gekennzeichnet durch** die Einstellung der Parameter jedes Subpixel-Dünnschichttransistors (73 - 76) derart, daß für jedes optisch aktivierte Pixel nur eine optisch ungesättigte Subpixel-Region vorhanden ist.

**Revendications**

1. Elément pixel d'un dispositif d'affichage à cristal liquide, ledit élément pixel comprenant:

a) une pluralité d'éléments sous-pixels (77 à 80) comportant chacun une zone d'affichage de sous-pixel définie par une première et une deuxième zone conductrice formant ensemble les plaques (34, 30) d'un condensateur à sous-pixel qui applique un champ électrique à un matériau de cristal liquide (35) intercalé entre lesdites plaques lorsqu'une charge électrique est accumulée sur lesdites plaques; et

b) un élément d'activation (73 à 76) pour chaque élément sous-pixel ayant une borne de sortie (734, 744, 754, 764) reliée à ladite première zone conductrice dudit condensateur à sous-pixel;

dans lequel

c) tous les éléments d'activation dudit élément pixel sont agencés de sorte que la tension d'activation commune ($V_G$) soit appliquée à une première électrode (733, 743, 753, 763) de chacun desdits éléments d'activation et qu'une tension de commande commune ($V_D$) soit appliquée à une deuxième électrode (732, 742, 752, 762) de chacun desdits éléments d'activation; et

dans lequel

d) chacun desdits sous-pixels atteint une saturation optique à une tension différente appliquée audit élément pixel et à l'intérieur dudit élément pixel le nombre d'éléments sous-pixels (77 à 80) dans lesquels le matériau de cristal liquide (35) est optiquement saturé, est une fonction de ladite amplitude de tension de commande ($V_D$);

caractérisé en ce que

e) chaque zone d'affichage de sous-pixel est de dimension sensiblement égale; et

f) chaque élément d'activation (73 à 76) dudit élément pixel a une valeur différente d'un paramètre présélectionné choisi pour charger le condensateur à sous-pixel associé à un régime de charge différent pendant la présence de ladite tension d'activation commune ($V_G$).

2. Elément pixel de la revendication 1, dans lequel les éléments d'activation sont des transistors à couche mince, caractérisé en ce que lesdits transistors à couche mince ont une structure géométrique présélectionnée déterminant le régime de charge du condensateur à sous-pixel associé (77 à 80).

3. Elément pixel de la revendication 2, caractérisé en ce que ladite structure géométrique présélectionnée est le rapport de la largeur (W) à la longueur (L) d'un canal de flux de courant dudit transistor à couche mince (73 à 76).

4. Elément pixel selon la revendication 1, 2 ou 3, caractérisé en ce que lesdits éléments sous-pixels (72 à 80) sont agencés en une séquence d'activation, un sous-pixel sélectionné atteignant la saturation optique en réponse à une tension de saturation appliquée audit élément de pixel, tandis qu'un pixel suivant dans ladite séquence d'activation n'a pas atteint une tension d'activation optique de seuil.

5. Dispositif d'affichage à cristal liquide comprenant une pluralité d'éléments pixels selon l'une des revendications précédentes, caractérisé par une pluralité de transistors à couche mince (73 à 76) pour l'activation des éléments pixels, pour laquelle chaque transistor à couche mince est couplé à un sous-pixel (77 à 80) et est adapté pour recevoir ladite tension de commande.

6. Dispositif d'affichage à cristal liquide de la revendication 5, caractérisé en ce que le matériau de cristal liquide (35) associé à un sous-pixel dans une séquence d'activation desdits sous-pixels (77 à 80) est soumis à une tension de saturation optique lorsque le matériau de cristal liquide associé à un sous-pixel séquentiel suivant est soumis à approximativement une tension de seuil, pour une tension prédéterminée appliquée audit pixel.

7. Dispositif d'affichage à cristal liquide de la revendication 6, caractérisé en ce que le matériau de cristal liquide (35) de chaque sous-pixel (77 à 80) est soumis à une tension de saturation optique pour une valeur différente de la tension appliquée audit pixel.

8. Méthode de création d'une échelle de gris pour un élément pixel dans un dispositif d'affichage à cristal liquide ayant une pluralité d'éléments pixels, chaque élément étant divisé en une pluralité de sous-pixels (77 à 80), caractérisé par

a) la division desdits éléments pixels de façon que tous les sous-pixels aient sensiblement la même surface d'affichage optique et tous les condensateurs à sous-pixel formés par les plaques conductrices (30, 34) sur les deux côtés du matériau de cristal liquide (35) aient sensiblement des capacités égales;

b) la fabrication d'un transistor à couche mince (73 à 76) pour chaque sous-pixel, tous les transistors à couche mince ayant sensiblement des tensions de seuil égales;

c) le couplage d'une borne de sortie (734, 744, 754, 764) de chacun desdits transistors à couche mince à une première plaque conductrice d'un condensateur à sous-pixel;

d) le couplage des bornes d'entrée (733, 743, 753, 763) desdits transistors à couche mince d'un élément pixel à l'un des fils d'amenée conducteurs d'une première pluralité (71) de fils d'amenée conducteurs, ladite première pluralité recevant des signaux ($V_D$) concernant une image d'affichage;

e) le couplage des bornes de commande (732, 742, 752, 762) desdits transistors à couche mince d'un élément pixel à l'un des fils d'amenée conducteurs d'une deuxième pluralité (72) de fils d'amenée conducteurs et la fourniture de signaux ($V_G$) concernant l'activation de pixels, à ladite seconde pluralité; et

f) la sélection de paramètres de structure de chacun desdits transistors à couche mince (73 à 76) de chaque élément pixel (77 à 80) de manière à charger différemment le condensateur à sous-pixel associé, ce qui fait que

g) chaque condensateur à sous-pixel est chargé pendant l'application d'un signal de commande ($V_G$) auxdites bornes de commande à un régime différent déterminé par l'amplitude d'une tension ($V_D$) appliquée auxdites bornes d'entrée.

9. Méthode de la revendication 8, caractérisée en ce que les paramètres des transistors à couche mince sont choisis de façon que pour l'application d'un signal de commande ($V_G$) d'une durée prédéterminée et pour l'application d'un signal d'image ($V_D$) d'une amplitude prédéterminée, un premier condensateur à sous-pixel (77 à 80) ait une charge emmagasinée qui fait que ledit matériau de cristal liquide (35) va se saturer optiquement lorsqu'une charge accumulée sur le condensateur à sous-pixel séquentiel suivant entraîne une activité optique insignifiante pour ledit condensateur à sous-pixel séquentiel suivant.

10. Méthode selon la revendication 8 ou 9, caractérisée par le réglage des paramètres de chaque transistor à couche mince à sous-pixel (73 à 76) de façon à fournir seulement une zone de sous-pixel optiquement non saturée pour chaque pixel optiquement activé.

$V/V_0 = 3$

90°

180°    0.5    0°

270°

$\phi$

FIG. 1A.

$V/V_0 = 2$

90°

180°    0.5    0°

270°

$\phi$

FIG. 1B.

$V/V_0 = 1.5$    90°

180°    0.5    0°

270°

$\phi$

FIG. 1C.

$V/V_0 = 0$    90°

180°    0.5    0°

270°

$\phi$

$\alpha = 45°$

FIG. 1D.

180°

270°

$\alpha$

90°

$\phi$

0°

FIG. 1E.

FIG. 2.

EP 0 316 822 B1

COLUMN m                    COLUMN m+1

ROW n

21                          21

20                          20

25          25              25

ROW n+1

21                          21

29

## FIG. 3A

COLUMN m                    COLUMN m+1

ROW n

G          20

S     D

5

ROW n+1

## FIG. 3B

31          VIEWING SIDE

32

R    G    B    R    G    B

36                          36

33          35      34

30

29

31          ↑  ↑  ↑  ↑  ↑  ↑  ↑

## FIG. 4  ILLUMINATION SIDE

14

FIG. 5A.
FIELD OFF
LIGHT BLOCKED

FIG. 5B.
FIELD ON
LIGHT PASSES

FIG. 5C.
FIELD 50% ON

GRAY LEVEL 2

GRAY LEVEL 4

GRAY LEVEL 6

GRAY LEVEL 8

*FIG. 6.*

FIG. 7.

**FIG. 8.**

**FIG. 9.**

$$\frac{W}{L}\Big)_1 > \frac{W}{L}\Big)_2$$

$V_{LC} = V_{SD}(1 - e^{-t/R \cdot C_{LC}})$

i. e. $V_{LC} = I_{ON} \cdot t/C_{LC}$

**FIG. 10.**

18

FIG. IIA.

| $V_D$ | $V_{LC}$ | | | | GRAY LEVEL |
|---|---|---|---|---|---|
| | SUBPIXEL No. 1 L/W = 10/69 | SUBPIXEL No. 2 L/W = 10/46 | SUBPIXEL No.3 L/W = 10/30 | SUBPIXEL No. 4 L/W = 10/20 | |
| 0.00V | 0.00V | 0.00V | 0.00V | 0.00V | 1 |
| 4.01V | 2.54V | 1.68V | 1.11V | 0.74V | 2 |
| 6.07V | 3.83V | 2.54V | 1.68V | 1.11V | 3 |
| 9.16V | 5.78V | 3.83V | 2.54V | 1.68V | 4 |
| 13.8V | 8.73V | 5.78V | 3.83V | 2.54V | 5 |

FIG. IIB.

FIG. 12

19